# EUROPEAN PATENT APPLICATION

(11) **EP 0 963 126 A2**
(43) Date of publication of application: **08.12.1999**
(21) Application number: 99304124.3
(22) Date of filing: 27.05.1999
(51) Int. Cl.: H04Q 7/22

(54) **System of starting and terminating data communication**

(30) Priority: 04.06.1998 JP 15645498
(71) Applicant: ALPS ELECTRIC CO., LTD., Ota-ku Tokyo 145 (JP)
(72) Inventor: Izumi, Hideo, Soma-shi, Fukushima-ken (JP); Miura, Yoshinori, Soma-shi, Fukushima-ken (JP); Mangan, Peter, South Cicular Road, Limerick (GB); Forde, Brian, Dublin 3 (GB); Murphy, Jenny, Harolds Cross, Dublin 6 (GB); Bartley, Ian, Fermoy, County Cork (GB)
(74) Representative: Kensett, John Hinton

(57) **Abstract**

To provide a system of starting and terminating data communication, which can specify and access a slave (data terminal equipment) while maintaining the compatibility with the RS232C/UART interface.

An address request signal is set to the high level, a slave is specified by adding data indicative of the number of the slave to serial transmission data, and the communication is started. The communication is terminated when no transmission data has been received for a predetermined time since the start of communication.

## Description

The present invention relates to a system of starting and terminating a DECT data communication in mobile communication according to time division multiple access (TDMA).

As multiple access systems in which a plurality of users share a radio transmission path and perform communication simultaneously, there are frequency division multiple access (FDMA) system, time division multiple access (TDMA) system, code division multiple access (CDMA) system, and the like.

In Japan, TDMA is practically used in PHS (Personal Handyphone System) and the like. A system competing against PHS is DECT (Digital Enhanced Cordless Telecommunication) widely used and adopted as a common specification in Europe including Russia, Africa, Near and Middle East, South America, Oceania, China, India, Taiwan, Singapore, Malaysia, and the like.

The DECT system is a radio communication standard which is common in Europe, established by ETSI (European Telecommunication Standard Institute) and has been developed on condition that not only voice but also data can be transferred.

The frequency band used in the DECT system is 1.88 to 1.89 GHz in Europe, 1.91 to 1.93 GHz in South America, and 1.90 to 1.92 GHz in China. The number of physical channels is 10, and time division in which 12 channels are multiplexed is employed.

In data communication according to DECT, as an interface, the RS-232C/UART (IEEE standard) serial interface is used.

A procedure for transferring data by once converting serial data into a code determined by DECT and, after reception of the data, for decoding the code into the serial data is employed.

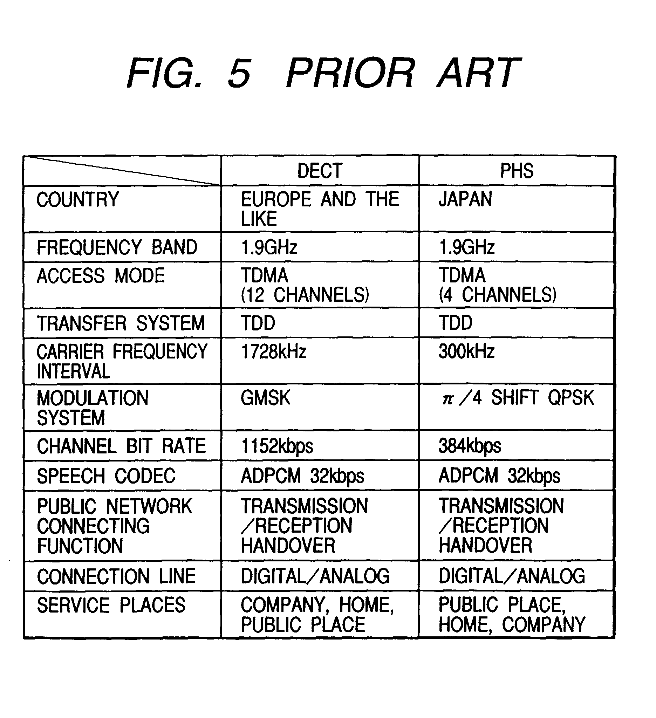

Fig. 5 shows an example of primary specifications of PHS used in Japan and DECT.

Hitherto, for the communication between a master and slaves in a voice telephone terminals of DECT described above, an intercom function such that the slaves start transmission and reception by keyboard operation, a general call from the master is sent to all of the slaves and a slave which received the call transfers it via the master to a slave which is supposed to receive the call (for example, the first slave receives the call but the destination of the call is the second slave) is used.

In case of performing the data communication according to the above method, the mater has to access a specific slave (DTE: Data Terminal Equipment such as PC) so that the master has to distinguish from which data terminal equipment the data has been sent. Although it is possible to specify the data terminal equipment when a unique format is determined, a problem that the compatibility with the serial interface (RS232C/UART) as the world standard is lost occurs and a solution to the problem has been demanded.

Since there is no keypad such as that in a telephone, a system of terminating the communication at a predetermined timing while maintaining the compatibility with the RS232C/UART interface is also necessary.

The invention has been achieved against such backdrop and it is an object of the invention to provide a system of starting and terminating data communication, which can specify and access a slave while maintaining the compatibility with the RS232C/UART interface.

According to the invention, there is provided a system of starting and terminating data communication, in a DECT system data transmitting and receiving apparatus comprising: a DECT coding unit for DECT coding serial transmission data; a transmitting unit for transmitting the data coded by the DECT coding unit at a predetermined transfer rate; a receiving unit for receiving the DECT data; a decoding unit for decoding the DECT reception data received by the receiving unit and outputting the decoded serial reception data; a frequency control unit for controlling the frequency of each of the transmitting and receiving units; a transmission/reception switching unit for switching connection of an antenna between the transmitting unit and the receiving unit; a transmission/reception slot control unit for performing a slot control in conformity with DECT to the serial transmission data and the serial reception data; and a control unit having a storage in which a control program is stored and to/from which data can be written/read, for controlling the above units, wherein communication between a master and a slave is started and terminated by: communication start control means for performing a control of starting the communication between the master and the slave; and communication termination control means for performing a control of terminating the communication between the master and the slave.

The communication start control means preferably sets an address request signal to the high level when communication is started from the master to a predetermined slave, and adds data indicative of the number of the predetermined slave to a header part or the like of transmission data, thereby starting the communication with the predetermined slave.

The communication start control means preferably starts communication from a predetermined slave to the master by adding data indicative of the number of the slave to a header part or the like of transmission data.

Further, when a slave to communicate with the master is specified, the communication start control means may enable communication with the slave to be performed by registering the number of the slave in the master.

The communication termination control means may be characterized by terminating the communication when no reception data has been received for a predetermined time since the start of communication.

Embodiments of the invention will now be described, by way of example only, with reference to the accompanying drawings in which;

Fig. 1 is a block diagram showing a functional construction of a DECT data transmission/reception apparatus according to an embodiment of the invention.

Fig. 2 is a diagram for explaining a communication start timing of a master according to the embodiment of the invention.

Fig. 3 is a diagram for explaining a communication start timing of the master and a slave (data terminal equipment) according to the embodiment of the invention.

Fig. 4 is a flowchart showing the procedure for terminating communication between the master and the data terminal equipment according to the embodiment of the invention.

Fig. 5 is a diagram showing an example of primary specifications of PHS used in Japan and DECT.

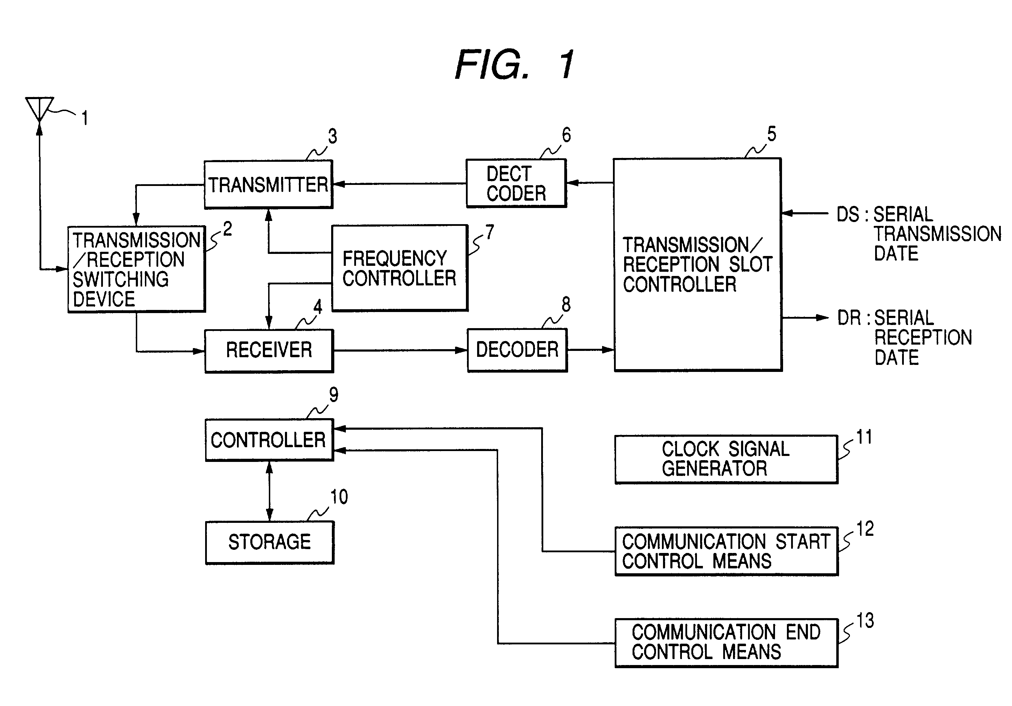

An embodiment of the invention will now be described hereinbelow with reference to the drawings. Fig. 1 is a block diagram showing a functional construction of a data communication apparatus according to an embodiment of the invention. In the diagram, reference numeral 1 denotes an antenna and the connection of the antenna is switched between a transmitter 3 and a receiver 4 by a transmission/reception switching device 2.

Serial transmission data DS passes through a transmission/reception slot controller 5 and is converted into a signal in the DECT format by a DECT coder 6, and further converted into a transmission signal by the transmitter 3 which operates at a frequency instructed by a frequency controller 7.

Data received by the receiver 4 which operates at the frequency instructed by the frequency controller 7 is decoded by a decoder 8 and outputted as serial reception data DR via the transmission/reception slot controller 5.

A storage 10 comprising a ROM (in which a control program is stored), an EEPROM (in which, an ID code, clock rate conversion data, product address, and frequency adjustment data are recorded), and a RAM (to/from which temporary data is written/read) and the like is connected to a controller 9 constructed by a CPU and its peripheral equipment. The controller 9 controls the transmission/reception switching device 2, the transmission/reception slot controller 5, the frequency controller 7, and the like. A clock signal generator 11 generates a signal for a timing of switching the above elements.

Reference numeral 12 denotes communication start control means for performing a control of starting the communication and 13 indicates a communication termination control means for performing a control of terminating the communication.

In the data communication apparatus having such a construction, a plurality of data terminal equipments are usually provided for a single master.

Communication between the master and the plurality of data terminal equipments is started in the following manner. The master sets an address request (ADDR_REQ) signal to the high level by the communication start control means 12, adds the data indicative of the number of the data terminal equipment as the party on the other end to the serial transmission data, and makes a transmission request REQ (RTS) signal active. The data terminal equipment having the corresponding data terminal equipment number is consequently connected, and data is transferred.

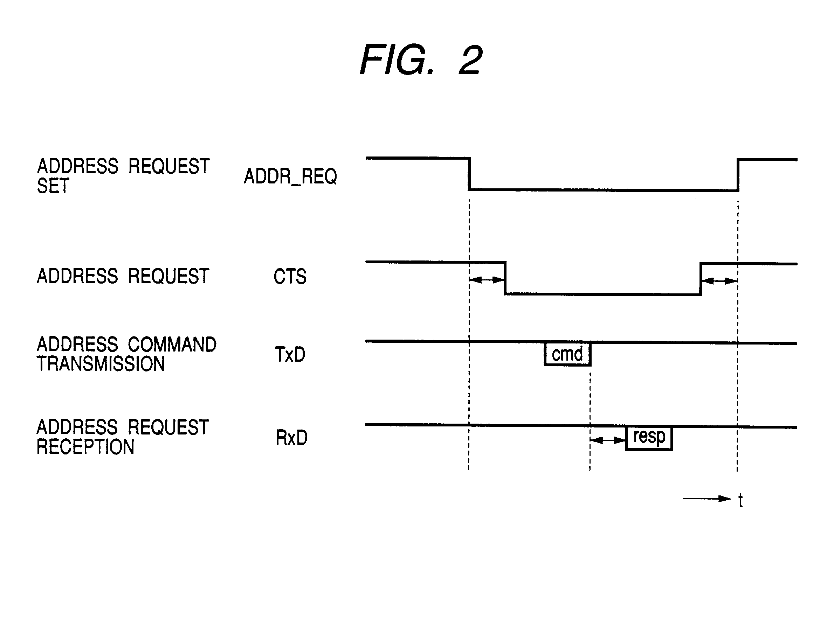

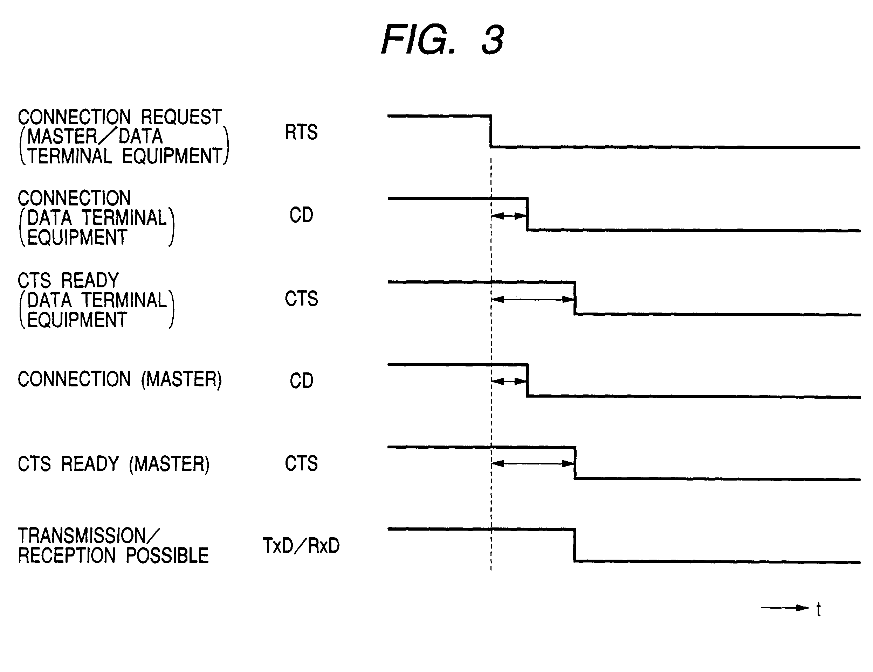

The timings of the signal transmission are shown in Figs. 2 and 3. Fig. 2 is a timing chart regarding the master. Fig. 3 is a timing chart regarding the master and the data terminal equipment.

When a connection is established from a data terminal equipment to the master, the data indicative of the data terminal equipment number is added to the header or the like of the serial data by the communication start control means 12 so that the master recognizes the equipment and the serial data is transferred to the master. The master recognizes which data terminal equipment sent the data and receives the data.

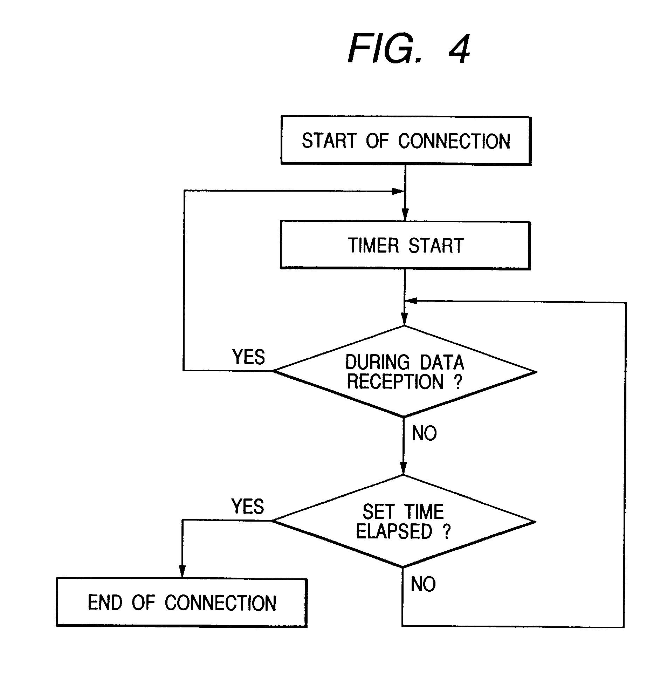

Fig. 4 shows a flowchart of termination of the communication. A general operation of Fig. 4 is performed in such a manner that the communication termination control means 12 in the data terminal equipment is provided with a timer, and when no data has been received for a predetermined time since the start of the connection, the connection ends.

Although the operation of the embodiment of the invention has been described in detail hereinabove, the invention is not limited to the embodiment and design changes and the like may be made without departing from the gist of the invention.

For example, when the data terminal equipment to be connected to the master is specified, the data terminal equipment number is registered in advance in the EEPROM in the storage 10 of the master and the master can be connected to only the data terminal equipment having the registered data terminal equipment number.

During the master (or data terminal equipment) is sending data, the "Send Request (RTS)" signal is set to the high level. Consequently, by forcedly setting the RTS signal to the low level, the communication can be terminated.

As described above, according to the invention, the address request signal is set to the high level, the data indicative of the data terminal equipment number of the data terminal equipment as the party on the other end is added to the serial transmission data, then the communication is started, and the communication is terminated when no transmission data is recognized for a predetermined time since the communication start. Thus, an effect such that the data terminal equipment is specified and the data communication can be started and terminated while maintaining the compatibility with the RS232C/UART interface standard can be obtained.

## Claims

1. A system of starting and terminating data communication, in a DECT system data transmitting and receiving apparatus comprising:
a DECT coding unit for DECT coding serial transmission data;
a transmitting unit for transmitting the data coded by the DECT coding unit at a predetermined transfer rate;
a receiving unit for receiving the DECT data;
a decoding unit for decoding the DECT reception data received by the receiving unit and outputting the decoded serial reception data;
a frequency control unit for controlling the frequency of each of the transmitting and receiving units;
a transmission/reception switching unit for switching connection of an antenna between the transmitting unit and the receiving unit;
a transmission/reception slot control unit for performing a slot control in conformity with DECT to the serial transmission data and the serial reception data; and
a control unit having a storage in which a control program is stored and to/from which data can be written/read, for controlling the above units,
wherein communication between a master and a slave is started and terminated by:
communication start control means for performing a control of starting the communication between the master and the slave; and
communication termination control means for performing a control of terminating the communication between the master and the slave.

2. A system of starting and terminating data communication according to claim 1, wherein the communication start control means sets an address request signal to the high level when communication is started from the master to a predetermined slave, and adds data indicative of the number of the predetermined slave to a header part or the like of transmission data, thereby starting the communication with the predetermined slave.

3. A system of starting and terminating data communication according to claim 1, wherein when communication is started from a slave to the master, the communication start control means adds data indicative of the number of the slave to a header part or the like of transmission data, and starts the communication.

4. A system of starting and terminating data communication according to claim 1, wherein when a slave to communicate with the master is specified, the communication start control means enables communication with the slave to be performed by registering the number of the slave in the master.

5. A system of starting and terminating data communication according to claim 1, wherein the communication termination control means terminates the communication when no data has been received for a predetermined time since the start of communication.
